# EUROPEAN PATENT APPLICATION

(11) **EP 0 992 464 A1**
(43) Date of publication of application: **12.04.2000**
(21) Application number: 99830576.7
(22) Date of filing: 13.09.1999
(51) Int. Cl.: C03C 17/30

(54) **Scratch-resistant glass top for furniture and production method**

(30) Priority: 25.09.1998 IT FI980216
(71) Applicant: Antonio Lupi S.p.A, 50050 Cerreto Guidi (Firenze) (IT)
(72) Inventor: Lupi, Marco, 50054 Fucecchio, Firenze (IT); Lupi, Nello, 50050 Cerreto Guido, Firenze (IT)
(74) Representative: Bardini, Marco Luigi

(57) **Abstract**

A method for producing a glass top for furniture, in particular bathroom furniture, with the property of being resistant to scratch and abrasion. The glass top is first subjected to sand-blasting and then a silicone resin is applied thereon to form a resin layer on it.

## Description

The present invention relates to a method for the production of a scratch-resistant glass top for furniture, especially bathroom furniture and in particular a top for wash-basin cabinets. The invention also relates to a scratch-resistant glass top for furniture produced according to the above method.

Several materials are commonly used to make support tops of furniture: in particular marble, granite, wood, laminated plastic for kitchen furniture; wood, ceramics, laminated metal for working tables; wood, glass and laminated plastic for office furniture; glass, marble and wood for drawing-room and bath furniture.

A top made of glass gives a superior value and elegance to the piece of furniture on which it is mounted and, thanks to the possibility of being coloured in the most different colours and fancy patterns, can satisfy all the requirements of the modern interior furnishing.

Glass tops also exhibit technical advantages with respect to tops made of other materials, the most important of which is the ability of being inert with respect to all the substances, and in particular the liquids of household common use such as alimentary liquids, alcohol, soaps, scents, detergents and solvents. In contrast, marble and wood, for example, unless adequately protected or treated, are immediately attached and spotted by such substances.

On the other hand, a glass top has the disadvantage of a relatively low resistance to abrasion, so that its surface is easily scored if accidentally scraped or hit with a body of metal, glass or other hard material. This disadvantage is particularly serious because scratches and spallings negatively affect the appearance of the glass top irreparably. In fact, it is unavailable an economically practicable method to restore the original surface smoothness except surfacing the damaged part, what however produces a perceivable local sinking.

The object of the present invention is to provide a method for the production of glass tops for furniture in which the inaesthetic effect of scratches or abrasions produced thereon can be eliminated in a simple and quick way by the user itself.

Another object of the present invention is to provide a method of the aforesaid type for treating scratches or deep abrasions in a easy, unexpensive and repeatable way thus allowing the original surface condition to be restored.

A further object of the present invention is to provide a glass top for furniture, capable of being resistant to scratches, that is having a surface structure on which scratches or abrasions can easily be hidden.

These objects are achieved with the method of the invention which comprises subjecting to sand-blasting the external face of the glass top, i.e. the surface of the top which, in use, is destined to remain in sight, then treating the sand-blasted surface with a silicone resin.

The sand-blasting operation can be carried out by means of conventional machines and gives a satinized appearance to the treated surface. However such surface is still unsuitable to accomplish the function of a top for furniture both for mechanical and aesthetic reasons. In fact, it would be easily scored up in a irreparable way and would spot also by simple contact with the hands. Moreover it exhibits a characteristic dull and powdery appearance. On the other hand, according to the present invention it has been found that by treating the sand-blasted surface with a silicone resin, the appearance is considerably revived and the surface becomes scratch resistant with the meaning that the track left by a hard body accidentally scored on it or hit against it can be hidden simply by passing on it a moistened soft cloth, preferably moistened of said silicone resin.

The glass which can be used in the method according to the invention (improperly called "crystal" in the field) can be of the so-called "float" or "ultraclear" type, can be either transparent or coloured and can be available in several thicknesses, even beyond 20 mm thick. It can be formed from an already machined flat glass slab and brought to its final shape, even comprising the central holes in the case of tops for bath furniture, as well as chamfering and perimetrical bevelling.

The choice of the sand-blasting to satinize the surface on the glass top is essential to the aim of achieving the result according the invention. In fact, satinized surfaces to make, for example, opaque glasses, can be obtained in the art by means of an acid treatment (for example, fluoridric acid). However, this technique involves the use of special equipment in order to avoid the risks coming from the use of strongly aggressive acids and must necessarily be applied before any other treatment, such as painting, is carried out so as to prevent the paint from being attached by the acid. Moreover, successive mechanical treatments, such as for example a perimetrical chamfering, unavoidably restore the original polished surface. Finally, regeneration of damaged surfaces by means of the same acid treatment would damage the painting and turn out effective in case of scratches or not very deep abrasions only.

The silicone resin used in the method according to the invention is a general purpose silicone resin, commonly available under various commercial names (as an example, the product called UNIVERSAL SILICONE marketed by CAPEC s.r.l. of Porcari (Lucca). This kind of resin has several industrial uses, for example in the field of diecasting and molding to facilitate the separation of pieces, as lubricating agent, as insulating material, etc..

In the pratical embodiment of the method according to the present invention, the glass slab is first machine processed to turn it into the desired shape and then is introduced in a conventional sand-blasting machine, in which the surface portion of the machined slab which is destined to remain in sight is treated. The silicone resin can be used both as a liquid or gel and in atomized form, in particular as a spray. Whatever the form is in which it is employed, a thin resin layer is formed on the sand-blasted surface that is then uniformly distributed by passing a cloth over the surface.

Therefore, the feature of the glass top according to the present invention consists in that the external face thereof is sand-blasted and treated with a silicone resin. If a scratch or abrasion is accidentally produced on its face, a corresponding clear track will be left on it temporarily. The track is due to the faceting of the microscopical crests formed by the sand-blasting treatment throughout the surface. However, it is sufficient to pass a soft cloth, moistened of silicone resin, over the portion of surface where the scratch was formed to cause any trace of it to disappear immediately. Of course, the scratch is not eliminated, but it is covered by the resin which restores an homogeneous surface appearance.

Tests carried out by the Applicant have shown that the glass tops made in accordance to the method of the invention maintain their appearance and resistance to scratches unchanged for more than one year. Anyway, the user can periodically renew the resin layer by repeating the surface treatment and applying the resin like a common wax.

Should the abrasion be so deep as to be impossible to be hidden by simply passing a cloth over the surface, the top can be sand-blasted again by the manufacturer to cause any trace of abrasion to disappear with a thickness reduction substantially equal to the depth of the abrasion. In this way the glass top can be reused with a clear advantage, while this would be impossible with a conventional levigated glass plane.

Variations and/or modifications can be brought to the method for producing scratch resistant glass tops for furniture and to the glass top according to the present invention without departing from the scope of the invention as defined in the appended claims.

## Claims

1. A method for producing a scratch resistant glass top for furniture characterized by the following steps:
- subjecting to sand-blasting the surface portion of the glass top which is destined to remain in sight; and
- treating the sand-blasted surface portion with a silicon resin.

2. The method according to claim 1, wherein the silicone resin is in a liquid or atomized state.

3. The method according to claim 1 or 2, wherein silicone resin is uniformly distributed on the sand-blasted surface to form a layer by means of a cloth.

4. The method according to anyone of the previous claims, wherein said glass top is formed by a transparent or coloured glass slab.

5. Glass top in particular for furniture characterized in that its external surface is sand-blasted and is uniformly coated by a silicone resin layer.
